## Europäisches Patentamt
## European Patent Office
## Office européen des brevets

(11) Numéro de publication: **0 060 756**
**B1**

(12) **FASCICULE DE BREVET EUROPEEN**

(45) Date de publication du fascicule du brevet: **22.08.84**

(21) Numéro de dépôt: **82400373.5**

(22) Date de dépôt: **04.03.82**

(51) Int. Cl.³: **H 02 G 13/00**

(54) **Paratonnerre ionisant à effet corona.**

(30) Priorité: **06.03.81 FR 8104509**

(43) Date de publication de la demande:
**22.09.82 Bulletin 82/38**

(45) Mention de la délivrance du brevet:
**22.08.84 Bulletin 84/34**

(73) Titulaire: **HELITA, Société Française, 116 rue du Bac, F-75007 Paris (FR)**

(72) Inventeur: **Schmitt, François, 9 rue du Côteau Flaxlanden, F-68720 Illfurth (FR)**
Inventeur: **Lehmann, Michel, 3, rue des Grillons, F-68350 Brunstatt (FR)**
Inventeur: **Binder, Gérard, Rue du 21 Novembre, F-68790 Morschwiller (FR)**
Inventeur: **Sautereau, Michel, 33, rue Anna-Jacquin, F-92100 Boulogne-Billancourt (FR)**

(84) Etats contractants désignés:
**AT BE CH DE FR GB IT LI LU NL SE**

(74) Mandataire: **Corre, Jacques Denis Paul et al, Cabinet Regimbeau 26, Avenue Kléber, F-75116 Paris (FR)**

(56) Documents cités:
**DE - B - 1 089 440**
**FR - A - 907 037**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

ACTORUM AG

## Description

La présente invention concerne les dispositifs de protection contre la foudre, notamment les paratonnerres ionisants. Le principe de ces dispositifs consiste à former au-dessus de la pointe du paratonnerre une colonne d'air ionisé. Il a en effet été constaté, notamment par les mesures de laboratoire, qu'une source d'ions provoque une diminution du potentiel disruptif atmosphérique, c'est-à-dire abaisse le seuil de tension à partir duquel se produit la décharge électrique, en augmentant la conductivité de l'air ambiant. La survenance de l'éclair est ainsi facilitée, et l'énergie libérée par le coup de foudre sera dérivée vers la terre par le conducteur de descente du paratonnerre.

L'étendue de la zone de protection d'un paratonnerre ionisant et l'efficacité de cette protection sont ainsi supérieures à celles d'une pointe de paratonnerre simple, dite également pointe Franklin.

Cette solution n'était pas pour autant dépourvue d'inconvénients, car jusqu'à présent la source d'ions était constituée de pastilles radio-actives placées autour de la pointe, les rayons alpha engendrés par ces pastilles provoquant l'ionisation recherchée. Mais l'usage de sources radio-actives impose des précautions particulières, tant au moment de leur fabrication que de leur stockage ou de leur montage.

Pour conserver les avantages du paratonnerre ionisant en éliminant les inconvénients liés aux sources radio-actives, il a été proposé, notamment par le brevet français N° 907037, au nom de Clément, d'alimenter une pointe de paratonnerre par un générateur de courant haute tension relié d'une part à la pointe et d'autre part à la terre, de manière à éjecter des charges électriques dans l'atmosphère environnante; ces charges sont supposées produites en quantité suffisante pour décharger le nuage, par recombinaison avec les charges électriques portées par celui-ci, ou tout au moins en altérant d'une façon suffisamment sensible l'ionisation de l'air ambiant pour rendre l'atmosphère conductrice. Un dispositif éclateur est disposé en parallèle sur le générateur pour dériver le coup de foudre.

Le dispositif imaginé met cependant en jeu des puissances considérables, de l'ordre de 40 kW, nécessaires pour produire cette masse d'ions très importante. Cette puissance ainsi que la très haute tension nécessaire (400 kV) imposeraient de multiples isolations et sécurités, qui n'ont pas été envisagées, pour atteindre le but recherché. Au contraire, l'invention utilise l'effet dit corona pour ioniser l'air environnant la pointe du paratonnerre: cet effet a lieu en présence d'une déformation locale, très forte, d'un champ électrique. C'est le cas, en particulier, dans le champ atmosphérique au voisinage d'un élément conducteur, par exemple une pointe très effilée. Si l'on éjecte des ions, positifs ou négatifs, par l'élément conducteur en le portant à un potentiel élevé, ces ions sont accélérés par le champ ambiant et provoquent eux-mêmes une ionisation secondaire des molécules gazeuses. La multiplication du nombre d'ions est d'ailleurs observable sous la forme d'une aigrette lumineuse surmontant la pointe. Les ions ainsi engendrés diffusent ensuite dans le milieu environnant la pointe de paratonnerre et sont accélérés par le champ électrique ambiant, formant la colonne d'air ionisé dont les effets ont été décrits plus haut.

Ce phénomène de multiplication permet d'amplifier l'effet naturel de pointe Franklin par la décharge corona produite au sommet de la pointe, tout en se contentant d'une faible puissance dissipée (de l'ordre de quelques dizaines ou centaines de milliwatts), et sous des tensions (quelques dizaines de kilovolts) pour lesquelles les techniques d'isolation et de protection sont usuelles et d'application aisée.

Il est absolument indispensable que la déformation locale du champ électrique — qui conditionne l'apparition de la décjarge corona — soit très importante et très localisée.

Comme la pointe n'est pas reliée à la terre (comme une pointe Franklin simple), mais à la source de haute tension, il est nécessaire de prévoir des moyens destinés à dériver vers la terre la foudre qui pourrait atteindre la pointe; de façon préférentielle, ces moyens consistent en un dispositif éclateur dont l'une des armatures est constituée par la base de la pointe elle-même, l'autre armature étant reliée à la terre par le conducteur de descente du paratonnerre. En cas de coup de foudre, l'éclateur devient conducteur et relie électriquement la pointe à la terre.

Pour cela, l'invention propose d'employer une pointe de paratonnerre coopérant avec un dispositif éclateur comportant une armature supérieure et une armature inférieure, ledit dispositif éclateur permettant de relier électriquement la pointe à la terre au cas où celle-ci serait soumise à un coup de foudre ou toute autre surtension, ainsi que des moyens d'ionisation pour porter la pointe à un potentiel élevé, caractérisé en ce que la surface latérale de la pointe est une surface de révolution inscrite dans un cône-enveloppe, engendrée par une méridienne tournant sa convexité vers l'axe de révolution, en ce que la base de la pointe présente une forme arrondie tournant sa convexité vers le bas, et constituant l'armature supérieure du dispositif éclateur, et en ce que ledit potentiel élevé est susceptible d'engendrer une émission d'ions par effet corona.

Pour un diamètre à la base et une hauteur de pointe donnés, il est ainsi possible de réduire sensiblement l'angle au sommet de la pointe par rapport à l'angle au sommet du cône-enveloppe, en conservant une bonne rigidité mécanique. De préférence, l'angle au sommet de cette pointe est de l'ordre de 10°. A titre de comparaison, le cône-enveloppe d'une telle pointe, qui aurait un rapport diamètre à la base/hauteur de 0,45, a un angle au sommet de 25°.

En outre, l'armature inférieure du dispositif éclateur peut être par exemple constitué d'une couronne conductrice de diamètre voisin de celui de la base de la pointe, reliée au conducteur de descente du paratonnerre, dont la face supérieure est plane et tournée vers la base arrondie de la pointe, et à distance de celle-ci. La forme arrondie évite les effets de bords entre armatures, et supprime toute arête anguleuse où pourraient apparaître des décharges corona parasites: de telles décharges à la base de la pointe seraient sans efficacité, car les ions ne diffuseraient pas et seraient immédiatement neutralisés, en raison de la proximité de la couronne portée au potentiel de la terre. En outre, ces décharges parasites pourraient abaisser la tension d'amorçage de l'éclateur jusqu'à une valeur inférieure au potentiel haute tension auquel est portée la pointe: l'énergie du générateur se dissiperait donc ainsi dans l'éclateur, au lieu de permettre la décharge corona au sommet de la pointe.

Pour améliorer l'efficacité de l'éclateur, il est avantageux de fractionner au moins une de ces armatures en une pluralité de canaux de conduction séparés par un diélectrique. Cela peut être notamment réalisé en pratiquant sur toute l'épaisseur de la couronne précitée une pluralité de fentes longitudinales.

En effet, lors du coup de foudre, un courant très intense traverse l'éclateur dans l'intervalle séparant ses deux armatures. Ce courant apparaît en un point très localisé, généralement unique, de cet intervalle. Une tension va donc naître aux bornes de l'éclateur, due à la résistance (faible, mais non nulle) existant entre les deux armatures lors de la décharge (cette résistance sera par la suite appelée résistance de l'éclateur).

Cette tension de choc électrique risque d'endommager le générateur haute tension, sinon lors d'un coup de foudre de puissance exceptionnelle, tout au moins après les chocs électriques répétés subis au cours d'une longue période d'utilisation.

Si, au lieu d'une décharge en un point unique, on peut dériver le coup de foudre en n décharges simultanées, la résistance de l'éclateur va se trouver divisée par ce nombre n, et donc également la tension de choc électrique, dans les mêmes proportions. La protection du générateur haute tension est ainsi améliorée de façon appréciable.

Le fractionnement permet d'avoir n éclateurs disposés en parallèle. Pour que ces éclateurs puissent fonctionner simultanément lors d'un coup de foudre, il est nécessaire de prévoir un découplage inductif des différents canaux de conduction entre eux: en effet, en l'absence de ce découplage, le courant de décharge suivrait un chemin unique, et donc un seul éclateur parmi les n prévus fonctionnerait effectivement.

La valeur nécessaire d'inductance est obtenue en donnant aux fentes, donc aux canaux, une longueur permettant d'allonger suffisamment le chemin électrique entre les armatures de deux éclateurs adjacents.

D'autres caractéristiques et avantages de l'invention apparaîtront à la lecture de la description détaillée ci-dessous, faite en référence aux figures annexées dans lesquelles:

la fig. 1 est une courbe représentant la production d'ions mesurée en fonction du potentiel de la pointe, relevée sur le dispositif expérimental de la fig. 1a,

la fig. 2 est une coupe de la pointe et du dispositif éclateur, à gauche selon un demi-plan vertical traversant une des fentes, et à droite selon un demi-plan vertical ne traversant pas de fente,

la fig. 3 est une perspective de la couronne et de la hampe seules, la ligne II-II correspondant à la coupe de la fig. 2,

la fig. 4 est une élévation correspondant à la fig. 3,

la fig. 5 représente schématiquement le dispositif fournissant à la pointe son potentiel,

les fig. 6a et 6b sont des schémas électriques équivalents, respectivement sans et avec fractionnement de l'éclateur, des circuits de protection.

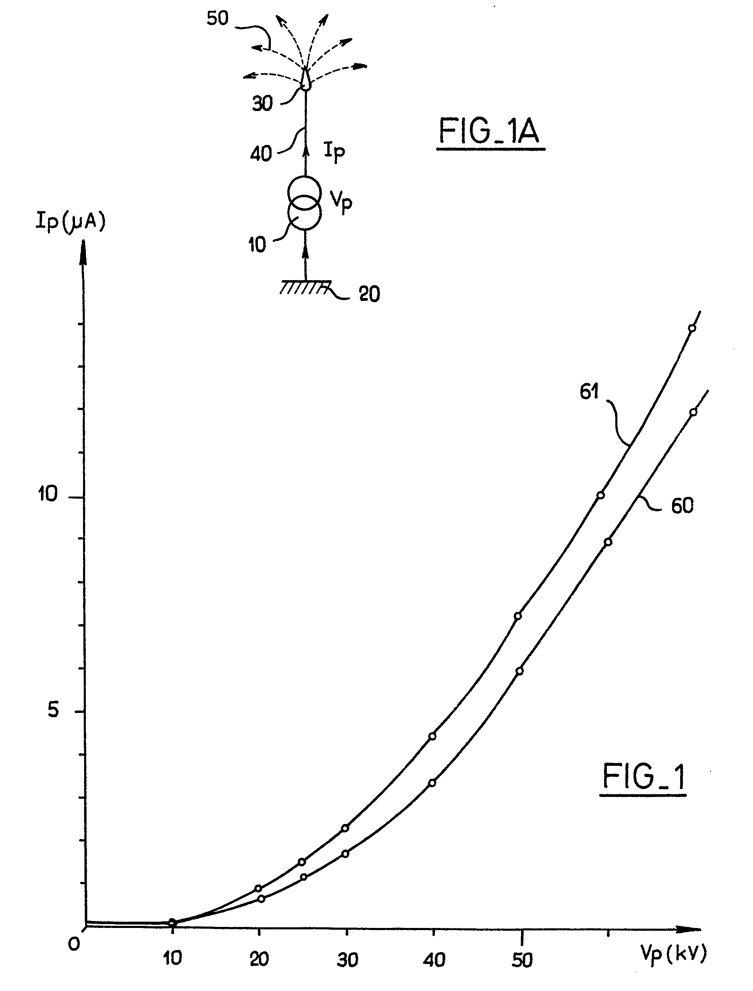

La courbe de la fig. 1 met en évidence la quantité d'ions produite par le dispositif selon l'invention, schématisé par la fig. 1a. Un générateur de potentiel 10 est relié d'une part à la terre 20, d'autre part à l'élément conducteur 30 du paratonnerre par l'intermédiaire du câble 40. Le générateur produit une différence de potentiel $V_p$ entre ses bornes; il est traversé par le courant $I_p$. Pour une tension $V_p$ faible, le courant $I_p$ est nul, car le circuit est ouvert. Pour une tension $V_p$ élevée, il apparaît cependant un courant $I_p$ dû à la production d'ions 50 au voisinage de la pointe, consécutive à une décharge corona. L'intensité du courant traversant le générateur, qui est un courant de charges électriques, représente donc le courant d'ions produit au sommet de la pointe. A la fig. 1 ont été portées en abscisse la tension $V_p$ exprimée en kilovolts, et en ordonnée l'intensité $I_p$ exprimée en microampères. La courbe 60 est relative à une pointe portée à un potentiel positif par rapport à la terre; la courbe 61, à un potentiel négatif par rapport à la terre. On constate que pour des tensions inférieures à 10 kV, l'intensité du courant est nulle, aux pertes diélectriques près. A partir de 10 kV environ survient l'effet corona qui, du fait de la production des ions, va provoquer une circulation du courant. Le phénomène s'amplifie au fur et à mesure que la tension $V_p$ croît. On constate que les résultats sont sensiblement voisins, que le potentiel de la pointe soit positif ou négatif. Néanmoins, il a été constaté par expérience que les nuages sont le plus souvent porteurs d'une électricité statique négative, chargeant positivement la terre par influence. En conséquence la pointe est avantageusement reliée au pôle positif du générateur de potentiel, le pôle négatif étant relié à la terre. De cette manière, la pointe est plus positive que n'est la terre, accentuant ainsi l'effet de pointe Franklin.

On constate également que la puissance dissipée est très réduite, grâce à l'effet multiplicateur de la décharge corona. Pour une tension $V_p$ de 25 kV, le courant $I_p$ et de l'ordre de 1 à 2 µA, soit une puissance de 25 à 50 mW.

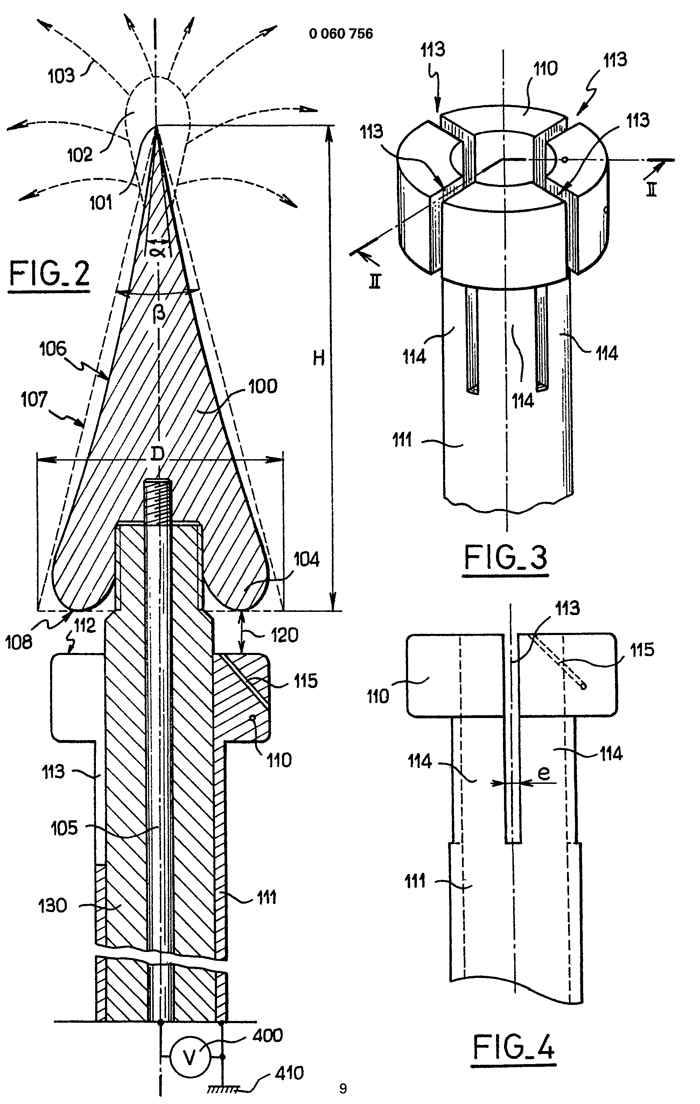

La fig. 2 représente une pointe effilée 100 à l'extrémité 101 de laquelle a lieu la décharge corona. Les ions 103 produits dans la zone 102 peuvent diffuser dans l'air environnant la pointe. La partie inférieure 104 est placée au voisinage

5         0 060 756         6

d'une couronne 110 reliée à la terre 410, par l'intermédiaire de la hampe conductrice 111 supportant le paratonnerre. La partie inférieure 104 de la pointe, la couronne 110 et l'intervalle d'air 120 situé entre elles constituent un dispositif éclateur. La largeur de l'intervalle 120 est telle qu'un éclair touchant la pointe soit dérivé à la terre par apparition d'une étincelle dans l'intervalle 120, mais que l'éclateur reste isolant pour la valeur du potentiel de fonctionnement auquel est portée la pointe par le générateur à haute tension (la tension de claquage est, par exemple et dans des conditions moyennes d'humidité ambiante, de 30 kV pour un potentiel de fonctionnement de 25 kV).

Le générateur, schématisé en 400, est relié à la pointe 100 par le conducteur 105. Avantageusement, ce conducteur 105 constitue l'âme d'un câble coaxial dont le blindage 111, relié à la terre 410, est constitué par la hampe du paratonnerre, tout au moins au voisinage de la pointe. Les deux conducteurs sont séparés par l'isolant 130.

La pointe présente une surface latérale 106 avec une forme générale rentrante, c'est-à-dire que la surface de révolution est engendrée par une méridienne arrondie tournant sa convexité vers l'axe de révolution. L'angle au sommet $\alpha$ de cette surface est ainsi inférieure à l'angle $\beta$ du cône-enveloppe 107 de la pointe. Cette forme de pointe permet un bon compromis entre un rapport diamètre à la base D/hauteur de la pointe H élevé (excellente rigidité mécanique) et un angle au sommet faible (accentuation de l'effet corona).

La base de la pointe présente une surface 108 arrondie qui élimine toute aspérité et donc tout risque d'apparition de décharges corona parasites.

La surface 108 constitue l'armature supérieure du dispositif éclateur; elle est disposée en vis-à-vis de la surface supérieure 112 de la couronne, qui en constitue l'armature inférieure. Cette surface 112 est de préférence plane. Une telle géométrie de l'éclateur permet d'éviter tout effet de bord entre les armatures, et assure ainsi une détermination précise de la tension de claquage.

La couronne 110 est elle-même munie de fentes 113 (visibles sur les fig. 2 à 4), par exemple au nombre de 4, entaillant la couronne sur toute son épaisseur. Ces fentes permettent de définir et d'isoler un même nombre de canaux de conduction 114.

Pour augmenter la longueur de ces caneaux de conduction, les fentes peuvent être prolongées sur la hampe conductrice 111 ; les fentes sont bien entendu pratiquées sur toute l'épaisseur de cette hampe.

Les fentes peuvent être laissées telles quelles, ou bien être remplies avec des lames ioslantes (non représentées), par exemple d'une matière identique à celle de l'isolant 130. Dans ce cas, le diélectrique séparant les canaux de conduction n'est plus de l'air, mais un diélectrique solide. En outre, la tenue aux intempéries est améliorée, évitant les infiltrations d'eau à l'intérieur de la hampe du paratonnerre.

De plus, cette tenue aux intempéries peut être améliorées par un canal 115 d'écoulement des eaux, qui évite l'accumulation de liquide dans l'intervalle 120 séparant les deux armatures de l'éclateur: outre les risques de corrosion par filtration à l'intérieur de la couronne, la présence d'eau à cet endroit aurait pour effet d'altérer les caractéristiques de fonctionnement de l'éclateur, et notamment sa tension de claquage.

La pointe, la couronne et la hampe sont en une matière bonne conductrice de l'électricité, résistant à la corrosion atmosphérique, et avec de bonnes qualités mécaniques; cette matière peut être par exemple du laiton ou de l'acier inoxydable. De préférence, la matière choisie est la même pour les différentes pièces, de manière à éviter les phénomènes de corrosion électrochimiques, notamment entre les armatures de l'éclateur.

Bien entendu, la couronne fendue constituée d'une pièce unique peut être remplacée par plusieurs pièces assemblées ensemble et reliées électriquement à leur base, les lamelles de remplissage des fentes jouant alors le rôle d'entretoises.

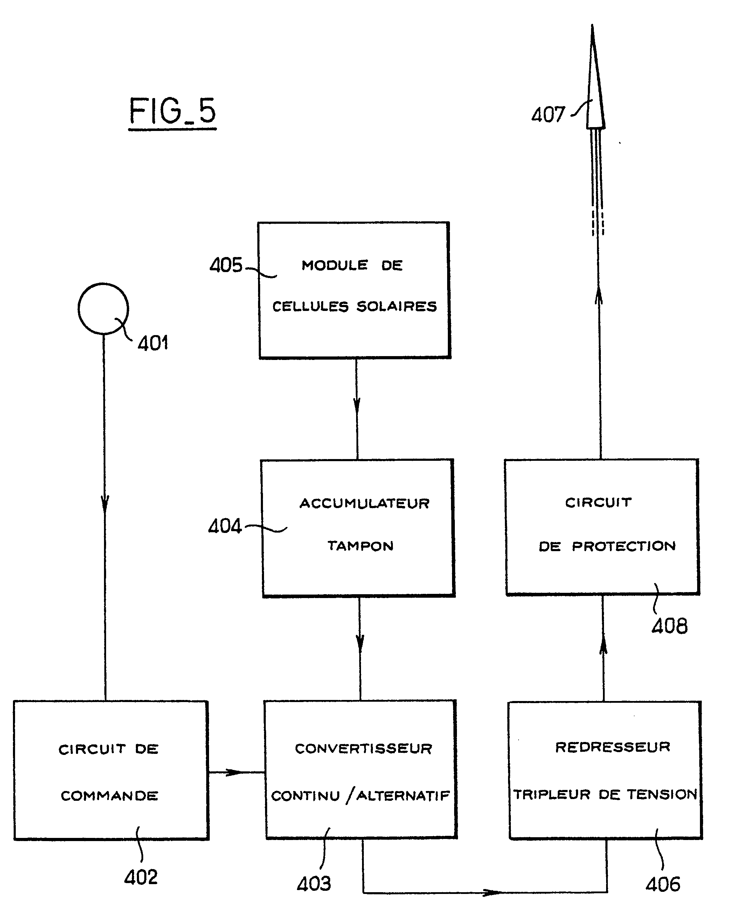

La fig. 5 représente des circuits d'alimentation électrique du dispositif selon l'invention. Un capteur 401 de champ électrique ambiant met en fonctionnement, par l'intermédiaire d'un circuit de commande 402, un convertisseur continu-alternatif 403. Celui-ci est alimenté par une source de tension continue constituée d'une batterie d'accumulateurs-tampons 404, elle-même chargée par un ensemble de cellules solaires 405. A la sortie du convertisseur 403, le courant alternatif est redressé par un circuit 406 assurant simultanément le triplement de la tension. Le courant redressé alimente enfin l'élément conducteur 407 du paratonnerre; un circuit de protection 408 est inséré entre le redresseur et l'élément conducteur, pour éviter que la foudre qui peut atteindre le paratonnerre n'endommage le circuit d'alimentation.

L'utilisation du capteur de champ électrique ambiant 401, coopérant avec les moyens générateurs de haute tension, permet de ne faire fonctionner le dispositif, c'est-à-dire n'alimenter en potentiel l'élément conducteur du paratonnerre, que lorsque le champ électrique atteint une valeur préétablie, correspondant à une forte probabilité de coup de foudre. En decà de cette valeur, le convertisseur 403 n'est plus alimenté, et les accumulateurs 404 ne se déchargent pas inutilement.

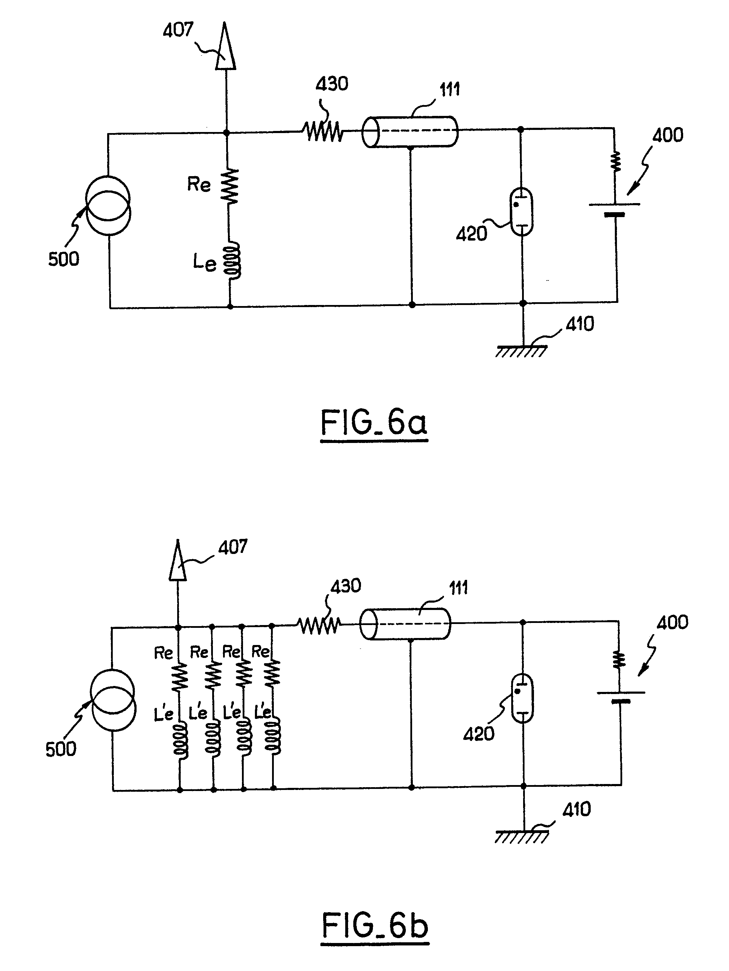

La fig. 6a est un schéma électrique équivalent expliquant le comportement d'un paratonnerre à éclateur unique lors de la survenance du coup de foudre.

Ce dernier peut être assimilé à une source 500 de courant très intense (supérieur à 10 000 A) débitant aux bornes de l'éclateur, c'est-à-dire entre la pointe 407 et la terre 410. L'éclateur a une résistance propre $R_e$ et une inductance propre $L_e$.

Dès l'amorçage de la décharge, une différence de potentiel va naître aux bornes de l'éclateur, d'autant plus forte que le courant de la décharge est plus important. Cette différence de potentiel peut devenir prohibitive et détruire le générateur de tension continue 400 lors d'une décharge d'une intensité exceptionnelle, ou tout au moins l'endommager par l'effet de chocs électriques répétés.

Pour protéger ce générateur en toute circonstance, l'invention propose de fractionner l'éclateur en n éclateurs individuels isolés les uns les autres par leurs inducteurs de liaison, de la manière décrite plus haut: chaque éclateur a une résistance propre $R_e$, identique à celle d'un éclateur unique (cette résistance est essentiellement déterminée par l'intervalle existant entre les deux armatures); l'inductance $L'_e$ de chaque éclateur est déterminée par la longueur du canal de conduction, c'est-à-dire essentiellement par la longueur des fentes séparatrices qui ont été pratiquées; comme il a été indiqué plus haut, la valeur de ces inductances doit permettre un découplage efficace des différents canaux de conduction, de manière à pouvoir observer l'amorçage simultané des décharges dans tous les éclateurs individuels.

De cette façon, le courant de décharge peut être dérivé sur plusieurs éclateurs, divisant par n la résistance globale de ceux-ci et par conséquent la différence de potentiel apparaissant aux bornes du générateur de tension continue.

De préférence, un second circuit de protection est intercalé entre l'éclateur et le générateur de haute tension: il comporte une résistance série 430, placée avant le câble coaxial 111 de descente du paratonnerre, et un tube à décharge 420 branché en parallèle sur le générateur.

Ce circuit de protection joue un rôle subsidiaire: si la tension aux bornes de l'éclateur est trop importante, le tube à décharge se met en conduction et protège aussi le générateur; le tube à décharge lui-même est protégé par la résistance série 430 de limitation du courant de décharge.

## Revendications

1. Dispositif de protection contre la foudre, comportant une pointe de paratonnerre (100) coopérant avec un dispositif éclateur comportant une armature (108) et une armature inférieure (112), ledit dispositif éclateur permettant de relier électriquement la pointe (100) à la terre au cas où celle-ci serait soumise à un coup de foudre ou toute autre surtension, ainsi que des moyens d'ionisation pour porter la pointe (100) à un potentiel élevé, caractérisé en ce que la surface latérale (106) de la pointe (100) est une surface de révolution inscrite dans un cône-enveloppe (107), engendrée par une méridienne tournant sa convexité vers l'axe de révolution, en ce que la base (104) de la pointe (100) présente une forme (108) arrondie tournant sa convexité vers le bas, et constituant l'armature supérieure (108) du dispositif éclateur, et en ce que ledit potentiel élevé est susceptible d'engendrer une émission d'ions par effet corona.

2. Dispositif selon la revendication 1, caractérisé en ce que l'angle au sommet ($\alpha$) de la pointe (100) est d'environ 10°.

3. Dispositif selon l'une des revendications 1 ou 2, caractérisé en ce que le potentiel auquel est portée la pointe (100) est positif par rapport à la terre.

4. Dispositif selon l'une des revendications 1 à 3, caractérisé en ce que l'armature inférieure (112) dudit dispositif éclateur est fractionnée en une pluralité de canaux de conduction (114) séparés par un diélectrique.

5. Dispositif selon la revendication 4, caractérisé en ce que l'armature inférieure (112) du dispositif éclateur comporte une couronne conductrice (110) portée au potentiel de la terre, placée en vis-à-vis de la base de la pointe (100) et à distance de celle-ci, cette couronne (110) comportant elle-même au moins deux fentes (113) longitudinales pratiquées sur toute son épaisseur, formant diélectrique pour séparer les canaux de conduction dans la couronne (110).

6. Dispositif selon la revendication 5, dans lequel la pointe de paratonnerre (100) est montée sur une hampe (111), caractérisé en ce que la couronne (110) est reliée à la hampe (111) du paratonnerre et en ce que les fentes (113) sont prolongées vers le bas sur la hampe.

7. Dispositif selon l'une des revendications 5 ou 6, caractérisé en ce que les lamelles en matériau de forte rigidité diélectrique sont placées dans les fentes (113) longitudinales.

8. Dispositif selon l'une des revendications 5 à 7, caractérisé en ce que la couronne (110) comporte un canal (115) d'écoulement des eaux.

9. Dispositif selon l'une des revendications 1 à 8, caractérisé en ce qu'il comporte en outre un circuit auxiliaire de protection intercalé entre la pointe conductrice et le générateur (400) de potentiel élevé, comportant une résistance (430) en série sur la ligne reliant la pointe au générateur (400), et un tube à décharge (420) en dérivation sur les bornes du générateur.

## Patentansprüche

1. Vorrichtung zum Blitzschutz mit einer Blitzableiterspitze (100), welche mit einer Funkenstrecken-Anordnung zusammenarbeitet, welche eine obere Elektrode (108) und eine untere Elektrode (112) aufweist, wobei die Funkenstrecken-Anordnung es gestattet, elektrisch die Spitze (100) mit der Erde zu verbinden, falls sie einen Blitzschlag oder jede andere Überspannung erfährt, sowie mit Mitteln zur Ionisierung, um die Spitze (100) auf ein erhöhtes Potential zu bringen, dadurch gekennzeichnet, dass die Seitenfläche (106) der Spitze (100) eine Drehfläche ist, welche in einen umgebenden Konus (107) eingeschrieben und durch einen Meridian erzeugt ist, der seine Konvexität der Drehachse zuwendet, dass die Basis (104) der Spitze (100) eine abgerundete Gestalt (108) aufweist, deren Konvexität nach unten gerichtet ist und die obere Elektrode (108) der Funkenstrecken-Anordnung bildet, und dass das besagte erhöhte Potential geeignet ist, eine Ionenemission durch Corona-Effekt zu erzeugen.

2. Vorrichtung nach Anspruch 1, dadurch gekennzeichnet, dass der Winkel (α) am Gipfel der Spitze (100) ungefähr 10° beträgt.

3. Vorrichtung nach einem der Ansprüche 1 oder 2, dadurch gekennzeichnet, dass das Potential, auf welches die Spitze (100) gebracht wird, gegenüber der Erde positiv ist.

4. Vorrichtung nach einem der Ansprüche 1 bis 3, dadurch gekennzeichnet, dass die untere Elektrode (112) der besagten Funkenstrecken-Anordnung in eine Vielzahl von Leiterkanälen (114) unterteilt ist, welche durch ein Dielektrikum getrennt sind.

5. Vorrichtung nach Anspruch 4, dadurch gekennzeichnet, dass die untere Elektrode (112) der Entlade-Anordnung eine Leiterkrone (110) aufweist, die Erdpotential aufweist und gegenüber der Basis der Spitze (100) und mit Abstand zu dieser angeordnet ist, wobei diese Krone (110) ihrerseits wenigstens zwei Längsschlitze aufweist, welche in ihre gesamte Dicke eingebracht sind und ein Dielektrikum bilden, um die Leiterkanäle in der Krone (100) voneinander zu trennen.

6. Vorrichtung nach Anspruch 5, bei welchem die Spitze des Blitzableiters auf einem Schaft angeordnet ist, dadurch gekennzeichnet, dass die Krone (100) mit dem Schaft (111) des Blitzableiters verbunden ist und dass die Schlitze (113) sich abwärts in den Schaft fortsetzen.

7. Vorrichtung nach einem der Ansprüche 5 und 6, dadurch gekennzeichnet, dass in den Längsschlitzen (113) Lamellen aus Material mit hoher Durchschlagsfestigkeit angeordnet sind.

8. Vorrichtung nach einem der Ansprüche 5 bis 7, dadurch gekennzeichnet, dass die Krone (110) einen Wasserablaufkanal (115) aufweist.

9. Vorrichtung nach einem der Ansprüche 1 bis 8, dadurch gekennzeichnet, dass darüber hinaus ein Hilfs-Schutzkreis vorgesehen ist, welcher zwischen der leitenden Spitze um dem Hochspannungsgenerator (400) angeordnet ist und einen Widerstand (430), der in Reihe in die Leitung geschaltet ist, welche die Spitze mit dem Generator (400) verbindet, sowie eine Entladungsröhre (420), die den Klemmen des Generators parallel geschaltet ist, aufweist.

## Claims

1. A device for protection against lightning, comprising a lightning conductor tip (100) cooperating with a spark-gap device comprising an upper member (108) and a lower member (112), said spark-gap device enabling the tip (100) to be connected electrically to the ground if the tip should be struck by lightning or subjected to any other overvoltage, and ionizing means for raising the tip (100) to a raised potential, characterized in that the lateral surface (106) of the tip (100) is a surface of revolution inscribed in an enveloping cone (107) and produced by a meridian turning its convexity towards the axis of revolution; and in that the base (104) of the tip (100) has a rounded shape (108) turning its convexity downwards and forming the upper member (108) of the spark-gap device; and in that the said raised potential is capable of producing an emission of ions by corona effect.

2. A device according to Claim 1, characterized in that the angle at the apex (α) of the tip (100) is about 10°.

3. A device according to one of Claims 1 or 2, characterized in that the potential to which the tip (100) is raised is positive relative to the ground.

4. A device according to one of Claims 1 to 3, characterized in that the said lower member (112) of the spark-gap device is divided into a plurality of conduction channels (114) separated by a dielectric.

5. A device according to Claim 4, characterized in that the lower member (112) of the spark-gap device comprises a conductive rim (110) at the potential of the ground and disposed opposite the base of the tip (100) and spaced therefrom, said rim (110) being formed with at least two longitudinal slots (113) through its whole thickness and forming a dielectric for separating the conduction channels in the rim (110).

6. A device according to Claim 5, wherein the lightning conductor tip (100) is mounted in a staff (111), characterized in that the rim (110) is connected to the lightning conductor staff (111), and in that the slots (113) extend along the staff towards the base thereof.

7. A device according to one of Claims 5 or 6, characterized in that strips of a rigid dielectric material are placed in the longitudinal slots (113).

8. A device according to one of Claims 5 to 7, characterized in that the rim (110) comprises a water drainage duct (115).

9. A device according to one of Claims 1 to 8, characterized in that it also comprises an auxiliary protective circuit which is interposed between the conductive tip and the generator (400) of raised potential and comprises a resistor (430) in series on the line connecting the tip to the generator (400) and a discharge tube (420) in parallel with the generator terminals.

FIG_1A

FIG_1

0 060 756

FIG_2

FIG_3

FIG_4

## FIG_5

407

405 — MODULE DE CELLULES SOLAIRES

401

404 — ACCUMULATEUR TAMPON

CIRCUIT DE PROTECTION

408

CIRCUIT DE COMMANDE

402

CONVERTISSEUR CONTINU / ALTERNATIF

403

REDRESSEUR TRIPLEUR DE TENSION

406

## FIG. 6a

## FIG. 6b